# EUROPEAN PATENT APPLICATION

(11) **EP 4 470 645 A1**
(43) Date of publication of application: **04.12.2024**
(21) Application number: 23802696.7
(22) Date of filing: 28.04.2023
(51) Int. Cl.: A63H 29/00, A63H 1/00

(54) **ROTARY DRIVE ASSEMBLY, LAUNCHER AND LAUNCH TOY**

(30) Priority: 10.05.2022 CN 202210507124
(71) Applicant: Alpha Group Co., Ltd., Shantou, Guangdong 515800 (CN); Guangzhou Alpha Culture Communication Co., Ltd., Guangzhou, Guangdong 510030 (CN)
(72) Inventor: HUANG, Zixuan, Shantou, Guangdong 515800 (CN); LI, Deming, Shantou, Guangdong 515800 (CN)
(74) Representative: Range, Christopher William
(86) International application number: PCT/CN2023/091634
(87) International publication number: WO 2023/216924

(57) **Abstract**

The present disclosure discloses a rotary drive assembly. The rotary drive assembly includes a drive rack, a switching unit, a first transmission unit, and an output unit. The output unit is fitted with and connected to a to-be-driven toy to output power. The first transmission unit has an end fitted with and connected to the output unit to transmit power. The drive rack is configured to drive the switching unit. The switching unit at least has a first position portion connected to the first transmission unit and a second position portion away from the first transmission unit and directly connected to the output unit. In response to the drive rack moving in a first direction, the switching unit is switched to the first position portion, and the first transmission unit is configured to drive the output unit to rotate forward. In response to the drive rack moving in a second direction, the switching unit is switched to the second position portion, and the switching unit is configured to drive the output unit to rotate forward. The first direction is opposite to the second direction. The present disclosure also discloses a launcher and a launch toy. In the present disclosure, the power can be output continuously, and significantly improve operational efficiency of accelerating the to-be-driven toy.

## Description

### FIELD

The present disclosure relates to the technical field of toys, and more particularly, to a rotary drive assembly, a launcher, and a launch toy.

### BACKGROUND

A launch toy is a toy popular with children. The launch toy usually includes a launcher and a launched object. The launched object is mounted on the launcher, and the launcher accelerates the launched object, and the launched object is then launched.

Existing launchers usually accelerate the launched object by pulling a cord or a handle, and they are all unidirectionally driven. That is, when the cord and the handle are pulled in one direction, the launched object is accelerated; and when the cord and the handle are reset, the launched object is not accelerated. The acceleration methods of the existing launchers have low acceleration efficiency and more acceleration frequencies and take a long time.

Therefore, it is essential to design a rotary drive assembly, a launcher, and a launch toy with significantly improved acceleration efficiency.

### SUMMARY

An object of the present disclosure is to overcome the shortcomings of the related art and provides a rotary drive assembly, a launcher, and a launch toy with significantly improved acceleration efficiency.

The technical solution of the present disclosure provides a rotary drive assembly. The rotary drive assembly includes a drive rack, a switching unit, a first transmission unit, and an output unit. The output unit is fitted with and connected to a to-be-driven toy to output power. The first transmission unit has an end fitted with and connected to the output unit to transmit power. The drive rack is configured to drive the switching unit. The switching unit at least has a first position portion connected to the first transmission unit and a second position portion away from the first transmission unit and directly connected to the output unit. In response to the drive rack moving in a first direction, the switching unit is switched to the first position portion, the output unit is driven by the first transmission unit to rotate forward. In response to the drive rack moving in a second direction, the switching unit is switched to the second position portion, the output unit is driven by the switching unit to rotate forward. The first direction is opposite to the second direction.

Further, the switching unit includes an input gear, a swing lever, and a swing lever gear. The input gear is in transmission connection with the drive rack. The swing lever has an end rotatably connected to a center of the input gear and the other end rotatably connected to a center of the swing lever gear. The input gear is meshed with the swing lever gear. In response to the drive rack moving in the first direction, the swing lever is driven by the drive rack to swing towards the first transmission unit, to enable the swing lever gear to be meshed with a transmission gear of the first transmission unit. In response to the drive rack moving in the second direction, the swing lever is driven by the drive rack to swing towards the output unit, to enable the swing lever gear to be in transmission with the output unit.

Further, the switching unit further includes a synchronous gear coaxially and fixedly connected to the input gear. The synchronous gear has a diameter smaller than a diameter of the input gear. The synchronous gear is meshed with the drive rack.

Further, the switching unit includes an input gear, a swing frame, a first swing gear, a second swing gear, and an intermediate gear. The input gear is in transmission connection with the drive rack. The swing frame has a first end portion and a second end portion away from the first end portion. The first swing gear is disposed at the first end portion of the swing frame. The second swing gear is disposed at the second end portion of the swing frame. The intermediate gear is disposed in a middle part of the swing frame and meshed with the first swing gear and the second swing gear simultaneously. The swing frame swings around an axis of the intermediate gear. The input gear is in transmission connection with the intermediate gear. In response to the drive rack moving in the first direction, the swing frame is driven by the intermediate gear to swing until the first swing gear is in transmission with the first transmission unit. In response to the drive rack moving in the second direction, the swing frame is driven by the intermediate gear to swing until the second swing gear is in transmission with the output unit.

Further, the switching unit further includes a second transmission unit and a synchronous gear. The second transmission unit is disposed between the input gear and the intermediate gear to transmit power. The synchronous gear is coaxially and fixedly connected to the input gear. The synchronous gear has a diameter smaller than a diameter of the input gear. The synchronous gear is meshed with the drive rack.

Further, the switching unit further has a third position portion, the switching unit is detached from each of the first transmission unit and the output unit at the third position portion. The rotary drive assembly further includes a center-returning elastic member connected to the switching unit. The center-returning elastic member is configured to drive the switching unit when the drive rack is stationary to enable the switching unit to be maintained at the third position portion.

Further, the output unit is an output gear; and the first transmission unit further includes an odd number of transmission gears sequentially arranged and meshed with each other. A transmission gear of the odd number of transmission gears at an end of the first transmission unit is configured to be fitted with and connected to the switching unit. A transmission gear of the odd number of transmission gears at the other end of the first transmission unit is configured to be meshed with the output gear.

The present disclosure also provides a launcher. The launcher includes a housing, a drive position portion mounted in the housing, and the rotary drive assembly described in any one of the above items. The switching unit, the first transmission unit, and the output unit are mounted in the housing, and the output unit at least partially extends to the drive position portion. The drive rack is movably connected to the housing.

The present disclosure also provides a launch toy. The launch toy includes a to-be-driven toy and the launcher. The to-be-driven toy is provided with a receiving unit. When the to-be-driven toy is placed at the drive position portion to transmit power, the receiving unit is fitted with and connected to the output unit. When the to-be-driven toy is driven, the to-be-driven toy is separated from the drive position portion.

Further, the to-be-driven toy is a spinning top toy. The launcher is a spinning top launcher; and the receiving unit is a gear surrounding a lower outer ring of the spinning top toy.

The following beneficial effects are realized after adopting the above-mentioned technical solutions.

In the present disclosure, since the output unit can be driven to rotate in response to the drive rack moving in the first direction and the second direction that are opposite to each other, the output unit can continuously and efficiently transmit the power to the to-be-driven toy. Therefore, continuous drive and acceleration operations are realized. In this way, the operational efficiency of drive and acceleration is significantly improved.

### BRIEF DESCRIPTION OF THE DRAWINGS

A content of the present disclosure will become easier to understand with reference to the accompanying drawings. It should be understood that these drawings are only for illustrative purposes and are not intended to limit the protection scope of the present disclosure.
FIG. 1 is a schematic view of a launch toy in a to-be-launched state according to an embodiment of the present disclosure.
FIG. 2 is a schematic view of a launch toy in a launching state according to an embodiment of the present disclosure.
FIG. 3 is a schematic view of a rotary drive assembly according to an embodiment of the present disclosure.
FIG. 4 is a partial enlarged view of a drive rack of a rotary drive assembly when it moves in a first direction according to an embodiment of the present disclosure.
FIG. 5 is a partial enlarged view of a drive rack of a rotary drive assembly when it moves in a second direction according to an embodiment of the present disclosure.
FIG. 6 is an exploded view of a rotary drive assembly according to an embodiment of the present disclosure.
FIG. 7 is a partial enlarged view of a rotary drive assembly according to another embodiment of the present disclosure.
FIG. 8 is a partial enlarged view of a drive rack of a rotary drive assembly when it moves in a first direction according to another embodiment of the present disclosure.
FIG. 9 is a partial enlarged view of the drive rack of a rotary drive assembly when it moves in a second direction according to another embodiment of the present disclosure.
FIG. 10 is a partial enlarged view of a housing and a driver according to an embodiment of the present disclosure.
FIG. 11 is a partial enlarged view of a driver according to an embodiment of the present disclosure.
FIG. 12 is a schematic view of a launch unit in a to-be-launched state according to an embodiment of the present disclosure.
FIG. 13 is a schematic view of a launch unit in a launching state according to an embodiment of the present disclosure.
FIG. 14 is a schematic view of a pressing member in a to-be-launched state according to an embodiment of the present disclosure.
FIG. 15 is a schematic view of a pressing member in a launching state according to an embodiment of the present disclosure.
FIG. 16 is a schematic view of a launch button locking an ejection member according to an embodiment of the present disclosure.
FIG. 17 is a schematic view of mounting of a launched object to a launcher according to an embodiment of the present disclosure.

### Reference numerals:

launcher 10:
housing 1: sword body 11, sword hilt12, launch groove 13, first position-limiting portion 14, guide ramp 15, second position-limiting portion 16, and limit slide groove 111;
rotary drive assembly 2:
driver 21: first upper cover 211, second upper cover 212, lower cover 213, and position limiter 214; and
drive rack 22;
switching unit 23: input gear 231, swing lever 232, swing lever gear 233, synchronous gear 234, swing lever frame 235, first swing gear 236, a second swing gear 237, an intermediate gear 238, and a second transmission unit 239;
first transmission unit 24: first transmission gear 241, second transmission gear 242, and third transmission gear 243;
output unit 25;
center-returning elastic member 26;
launch unit 3: launch button 31, ejection member 32, pressing member 33, lock hook 311, lock groove 321, and spinning top mounting groove 322; and
to-be-driven toy 20: a protruding ring 201, a gear 202, and a spinning top tip 203.

### DETAILED DESCRIPTION

Specific embodiments of the present disclosure are further described below with reference to the drawings.

It is easy to understand that according to technical solutions of the present disclosure, a variety of structural forms and implementations may be interchangeable by a person skilled in the art without changing the essential spirit of the present disclosure. Therefore, the following specific embodiments and drawings are only exemplary illustrations of the technical solutions of the present disclosure and should not be regarded as entirety of the present disclosure or as a limitation or restriction to the technical solutions of the disclosure.

Orientation terms such as "up", "down", "left", "right", "front", "rear", "anterior", "posterior", "top", "bottom" mentioned or may be mentioned in this specification are defined relative to structures shown in the drawings. They are relative concepts and may change accordingly based on their different positions and different usage states. Therefore, these or other orientation terms should not be interpreted as restrictive terms.

### Embodiment 1:

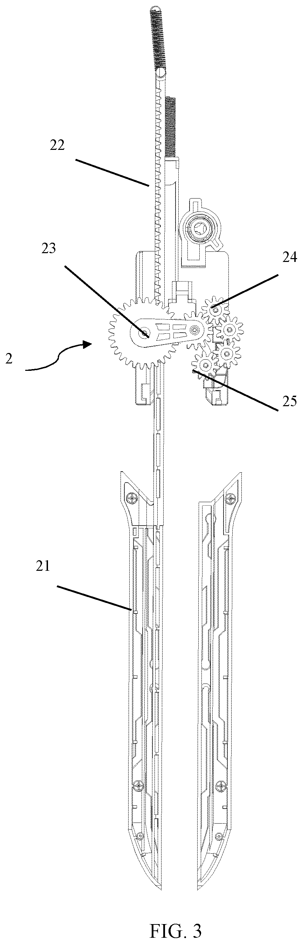

As illustrated in FIGS. 3 to 6, there is provided a rotary drive assembly 2. The rotary drive assembly 2 includes a drive rack 22, a switching unit 23, a first transmission unit 24, and an output unit 25. The output unit 25 is fitted with and connected to a to-be-driven toy 20 to output power. The first transmission unit 24 has an end fitted with and connected to the output unit 25 to transmit power. The drive rack 22 is configured to drive the switching unit 23. The switching unit 23 at least has a first position portion connected to the first transmission unit 24 and a second position portion away from the first transmission unit 24 and directly connected to the output unit 25. In response to the drive rack 22 moving in a first direction, the switching unit 23 is switched to the first position portion, the output unit 25 is driven by the first transmission unit 24 to rotate forward. In response to the drive rack 22 moving in a second direction, the switching unit 23 is switched to the second position portion, the output unit 25 is driven by the switching unit 23 to rotate forward. The first direction is opposite to the second direction.

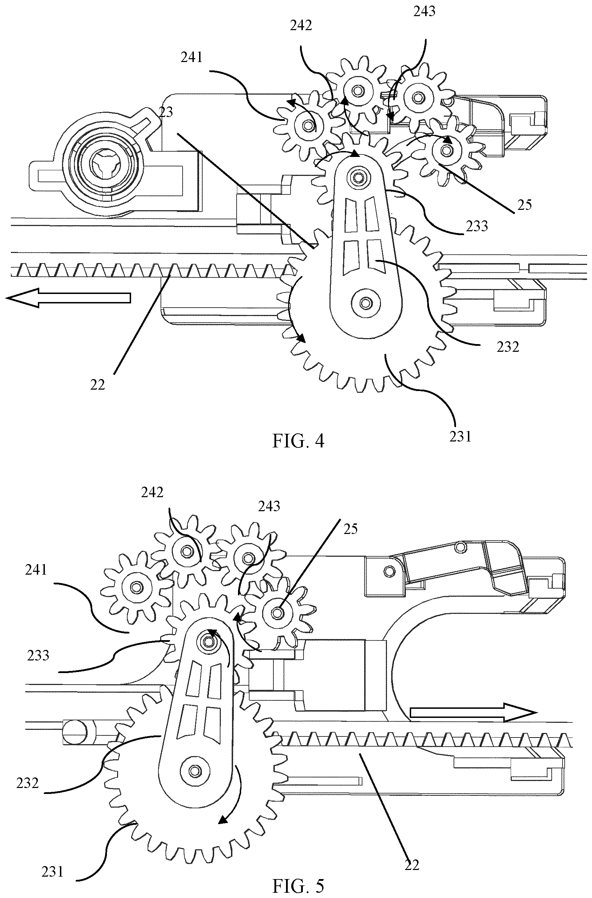

Specifically, as illustrated in FIG. 4, in response to the drive rack 22 moving leftward (in a first direction) in FIG. 4, the switching unit 23 is driven by the drive rack 22 to switch to the first position portion. In this way, the switching unit 23 is connected to the first transmission unit 24. During the leftward movement of the drive rack 22, the first transmission unit 24 is driven by the switching unit 23, and the first transmission unit 24 in turn drives the output unit 25 to rotate forward. When the to-be-driven toy 20 is connected to the output unit 25, the output unit 25 can output power to the to-be-driven toy 20 to achieve power transmission.

As illustrated in FIG. 5, in response to the drive rack 22 moving rightward (in a second direction) in FIG. 5, the switching unit 23 is driven by the drive rack 22 to switch to the second position portion. In this way, the switching unit 23 is detached from the first transmission unit 24 and switched to be directly connected to the output unit 25. During the rightward movement of the drive rack 22 to the right, the output unit 25 is directly driven to rotate forward by the switching unit 23. When the to-be-driven toy 20 is connected to the output unit 25, the output unit 25 can output power to the to-be-driven toy 20 to achieve power transmission.

In this embodiment, when the drive rack 22 moves in two opposite directions, the output unit 25 can be rotated forward, allowing the output unit 25 to continuously transmit the power to the to-be-driven toy 20. In this way, operational efficiency of the power output is improved.

Preferably, the output unit 25 is an output gear, and the first transmission unit 24 further includes an odd number of transmission gears sequentially arranged and meshed with each other. A transmission gear of the odd number of transmission gears at an end of the first transmission unit is configured to be fitted with and connected to the switching unit 23. A transmission gear of the odd number of transmission gears at the other end of the first transmission unit is configured to be meshed with the output gear.

Specifically, as illustrated in FIG. 4, the first transmission unit 24 includes a first transmission gear 241, a second transmission gear 242, and a third transmission gear 243 that are meshed sequentially. The switching unit 23 is connected to the first transmission gear 241. The first transmission gear 241 is meshed with the second transmission gear 242. The second transmission gear 242 is meshed with the third transmission gear 243. The third transmission gear 243 is meshed with the output unit 25 (output gear).

Preferably, the first transmission unit 24 may also include only one transmission gear. The transmission gear is directly meshed with the output gear.

Optionally, the first transmission unit 24 is not limited to a gear structure, but may also be other transmission structures. The output unit 25 is not limited to a gear structure, but may also be other output transmission structures.

Further, as illustrated in FIGS. 4 to 5, the switching unit 23 includes an input gear 231, a swing lever 232, and a swing lever gear 233. The input gear 231 is connected to the drive rack 22. The swing lever 232 has an end rotatably connected to a center of the input gear 231 and the other end rotatably connected to a center of the swing lever gear 233. The input gear 231 is meshed with the swing lever gear 233.

In response to the drive rack 22 moving in the first direction, the swing lever 232 is driven by the drive rack 22 to swing towards the first transmission unit 24, to enable the swing lever gear 233 to be meshed with a transmission gear of the first transmission unit 24.

In response to the drive rack 22 moving in the second direction, the swing lever 232 is driven by the drive rack 22 to swing towards the output unit, to enable the swing lever gear 233 to be in transmission with the output unit.

Specifically, as illustrated in FIG. 4, in response to the drive rack 22 moving in the first direction, the input gear 231 is driven by the drive rack 22 to rotate counterclockwise, to enable the input gear 231 to drive the swing lever 232 to swing leftward, and thus to enable the swing lever 232 to drive the swing lever gear 233 to move leftward and to be meshed with the first transmission gear 241. Since the input gear 231 is meshed with the swing lever gear 233, the output gear 231 drives the swing lever gear 233 to rotate clockwise, the swing lever gear 233 in turn drives the first transmission gear 241 to rotate counterclockwise, the first transmission gear 241 in turn drives the second transmission gear 242 to rotate clockwise, the second transmission gear 242 in turn drives the third transmission gear 243 to rotate counterclockwise, and the third transmission gear 243 in turn drives the output gear 25 to rotate clockwise (to rotate forward).

As illustrated in FIG. 5, in response to the drive rack 22 moving in the second direction, the input gear 231 is driven by the drive rack 22 to rotate clockwise, to enable the input gear 231 to drive the swing lever 232 to swing rightward, and thus to enable the swing lever 232 to drive the swing lever gear 233 to move rightward and to be meshed with the output gear 25. The input gear 231 drives the swing lever gear 233 to rotate counterclockwise, and the swing lever gear 233 in turn drives the output gear 25 to rotate clockwise (to rotate forward). In this way, the output gear 25 drives the transmission gear of the first transmission unit 24 to rotate, but the first transmission unit 24 is separated from the swing lever gear 233 and provide no transmission.

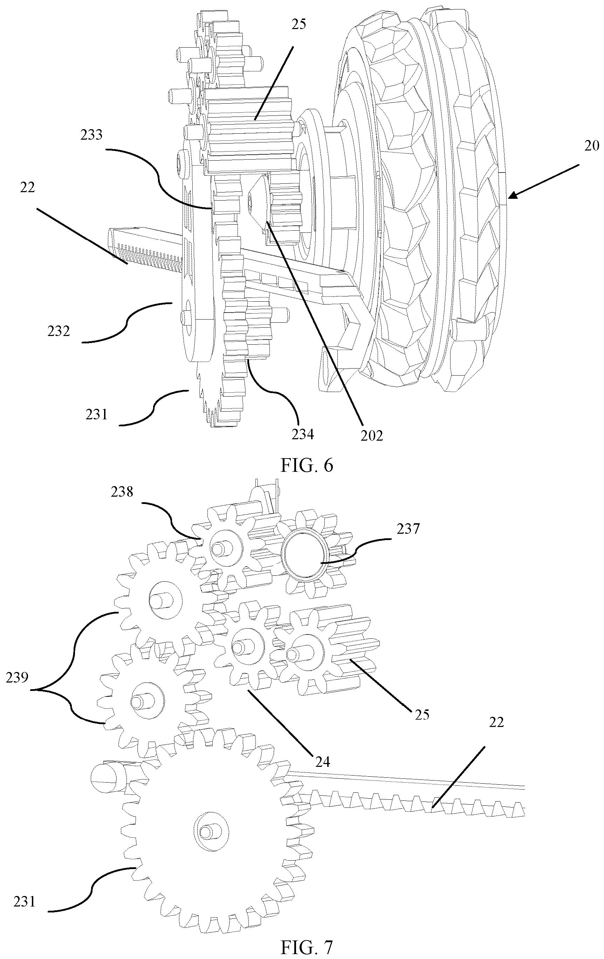

Further, as illustrated in FIG. 6, the switching unit 23 further includes a synchronous gear 234 coaxially fixedly connected to the input gear 231. The synchronous gear 234 has a diameter smaller than a diameter of the input gear 231. The synchronous gear 234 is meshed with the drive rack 22. When the drive rack 22 moves, the synchronous gear 234 is driven to rotate and in turn drives the input gear 231 to rotate synchronously.

Optionally, the drive rack 22 may also directly drive the input gear 231 to rotate, or drive the input gear 231 to rotate by other transmission members.

In this embodiment, as illustrated in FIG. 6, the to-be-driven toy 20 is a spinning top toy, and the rotary drive assembly 2 is configured to accelerate the spinning top toy. The output unit 25 is connected to a gear 202 on an outer ring of a lower part of the spinning top toy. When the output unit 25 rotates forward, the gear 202 can be driven to rotate, thereby accelerating a toy cam.

Optionally, the to-be-driven toy 20 is not limited to the spinning top toy, but may also be a toy car, a toy animal with gears, etc.

In this embodiment, the output unit 25 can be rotated forward by driving the drive rack 22 of the to-be-driven toy 20 in a reciprocating manner to move back and forth in its own length direction (i.e., in the first direction and the second direction). Therefore, the spinning top toy is continuously accelerated, which doubles acceleration efficiency.

### Embodiment 2:

As illustrated in FIGS. 7 to 9, in contrast to Embodiment 1, the switching unit 23 includes an input gear 231, a swing frame 235, a first swing gear 236, a second swing gear 237, and an intermediate gear 238. The input gear 231 is in transmission connection with the drive rack 22. The swing frame 235 at least has two end portions including a first end portion and a second end portion away from the first end portion. The first swing gear 236 is disposed at the first end portion of the swing frame 235. The second swing gear 237 is disposed at the second end portion of the swing frame 235. The intermediate gear 238 is disposed in a middle part of the swing frame 235 and meshed with the first swing gear 236 and the second swing gear 237 simultaneously. The swing frame 235 swings around an axis of the intermediate gear 238. The input gear 231 is in transmission connected with the intermediate gear 238. In response to the drive rack 22 moving in the first direction, the swing frame 235 is driven by the intermediate gear 238 to swing until the first swing gear 236 is in transmission with the first transmission unit 24. In response to the drive rack 22 moving in the second direction, the swing frame 235 is driven by the intermediate gear 238 to swing until the second swing gear 237 is in transmission with the output unit 25.

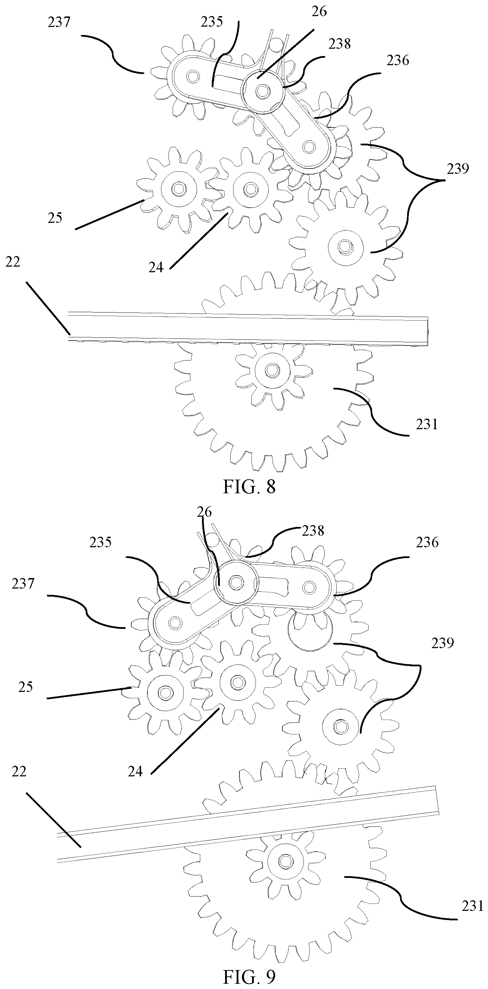

Specifically, as illustrated in FIG. 8, in response to the drive rack 22 moving in the first direction, the intermediate gear 238 is driven by the drive rack 22, to enable the intermediate gear 238 to drive the swing frame 235 to swing rightward until the first swing gear 236 is in transmission with the first transmission unit 24. The first transmission unit 24 is a transmission gear. The transmission gear is meshed with an output gear of the output unit 25 and to drive the output gear to rotate forward.

As illustrated in FIG. 9, in response to the drive rack 22 moving in the second direction, the intermediate gear 238 is driven by the drive rack 22, to enable the intermediate gear 238 to drive the swing frame 235 to swing leftward until the second swing gear 237 is in direct transmission with the output unit 25 and to drive the output gear to rotate forward. In this way, the first swing gear 236 is separated from the first transmission unit 24. When the output gear of the output unit 25 rotates forward, the transmission gear of the first transmission unit 24 is driven to rotate, but this transmission gear provides no transmission.

In this embodiment, when the drive rack 22 moves in the first direction and the second direction opposite to the first direction, the output unit 25 can be driven to rotate forward, allowing for the driving and the acceleration of the to-be-driven toy. In this way, an improvement in the efficiency of the power output is facilitated.

Further, as illustrated in FIGS. 7 to 9, the switching unit 23 further includes a second transmission unit 239 and a synchronous gear 234. The synchronous gear 234 is coaxially fixedly connected to the input gear 231. The synchronous gear 234 has a diameter smaller than a diameter of the input gear 231. The synchronous gear 234 is meshed with the drive rack 22. The second transmission unit 239 is disposed between the input gear 231 and the intermediate gear 238 to transmit power.

Specifically, the drive rack 22 drives the synchronous gear 234 to rotate, and the synchronous gear 234 in turn drives the input gear 231 to rotate synchronously. Power of the input gear 231 is transmitted to the second transmission unit 239 and then transmitted to the intermediate gear 238 by the second transmission unit 239.

In this embodiment, the second transmission unit 239 includes two transmission gears. One of the two transmission gears is meshed with the input gear 231, and the other one of the two transmission gear is meshed with the intermediate gear 238.

Optionally, the second transmission unit 239 may also include other even number of transmission gears, or other transmission members.

Further, as illustrated in FIGS. 8 to 9, the switching unit 23 further has a third position portion detached from each of the first transmission unit 24 and the output unit 25, and the rotary drive assembly 2 further includes a center-returning elastic member 26 connected to the switching unit 23. The center-returning elastic member 26 is configured to drive the switching unit 23 when the drive rack is stationary to enable the switching unit 23 to be maintained remain at the third position portion.

Specifically, the center-returning elastic member 26 may be a torsion spring. The torsion spring surrounds a periphery of a rotation shaft of the intermediate gear 238. When the swing frame 235 deflects toward the first position portion or the second position portion, the torsion spring stores energy. When the drive rack 22 is not applied with a driving force or stops moving, the torsion spring drives the swing frame 235 to rotate back to the third position portion. At the third position, the first swing gear 236 is separated from the first transmission unit 24, and the second swing gear 237 is separated from the output unit 25.

The center-returning elastic member 26 can provide a center-returning function: the center-returning is to avoid that the drive rack 22 stops moving at a moment of switching from insertion to pulling out of the drive rack 22, causing the output gear to be hindered and slowed down or even stopped.

The center-returning elastic member 26 also provide a buffer function: a duration from when the switching unit 23 is in transmission with the first transmission unit 24 until the switching unit 23 is meshed with the output gear may be slightly extended, and therefore a player has a certain buffer duration after a switching action, to avoid that an initial speed of the rack is too slow and affects an output gear that rotates at a high speed.

By implementing this embodiment, it can be achieved that when the driving gear 22 moves back and forth in the length direction of the to-be-driven toy 20, the output gear can be continuously driven forward to achieve the continuous power transmission to the to-be-driven toy. In this embodiment, the output gear can be avoided from being slowed down during the driving process and high-speed transmission can be achieved.

### Embodiment 3:

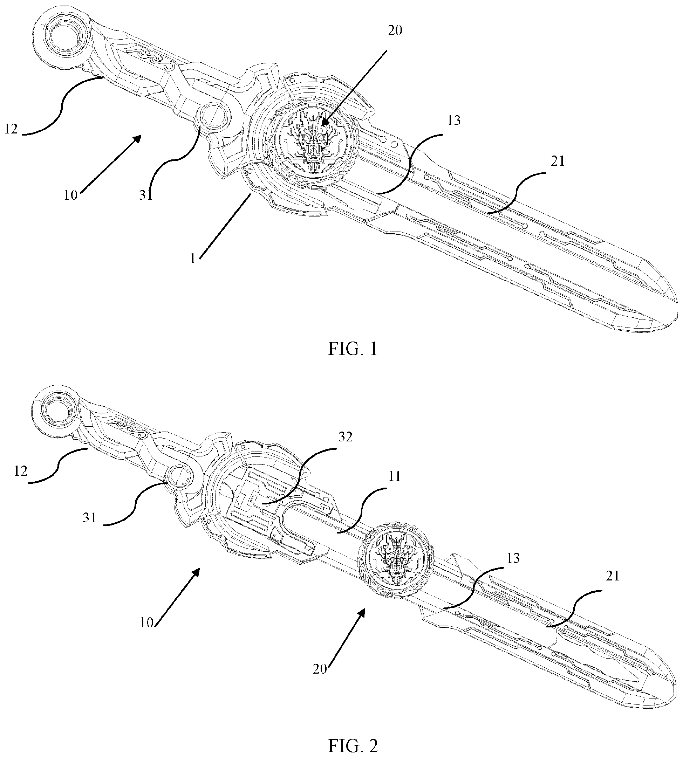

As illustrated in FIGS. 1 to 3, there is provided a launcher 10. The launcher 10 includes a housing 1 and a drive position portion mounted in the housing 1, and the rotary drive assembly 2 in any of the above embodiments. The switching unit 23, the first transmission unit 24, and the output unit 25 are mounted in the housing 1, and the output unit 25 at least partially extends to the drive position. The drive rack 22 is movably connected to the housing 1.

Specifically, as illustrated in FIG. 1, the to-be-driven toy 20 is mounted on the drive position portion of the launcher 10. In this case, the output unit 25 is linked with the to-be-driven toy 20. When the drive rack 22 is driven, the to-be-driven toy 20 can be accelerated.

As illustrated in FIG. 2, when the to-be-driven toy 20 is accelerated to a certain extent, a launch button 31 of the launcher 10 is pressed to launch the to-be-driven toy 20.

Further, as illustrated in FIG. 3, the rotary drive assembly 2 further includes a driver 21. The driver 21 is fixedly connected to an end of the drive rack 22.

As illustrated in FIGS. 1 and 2, the driver 21 surrounds an outside of the housing 1 of the launcher 10. In this way, the player can easily hold the driver 21 to drive the driver 21 to reciprocate in the length direction of the launcher 10. The driver 21 drives the drive rack 22 to move reciprocally in the first direction and the second direction. Ultimately, the output unit 25 continuously rotates forward.

### Embodiment 4:

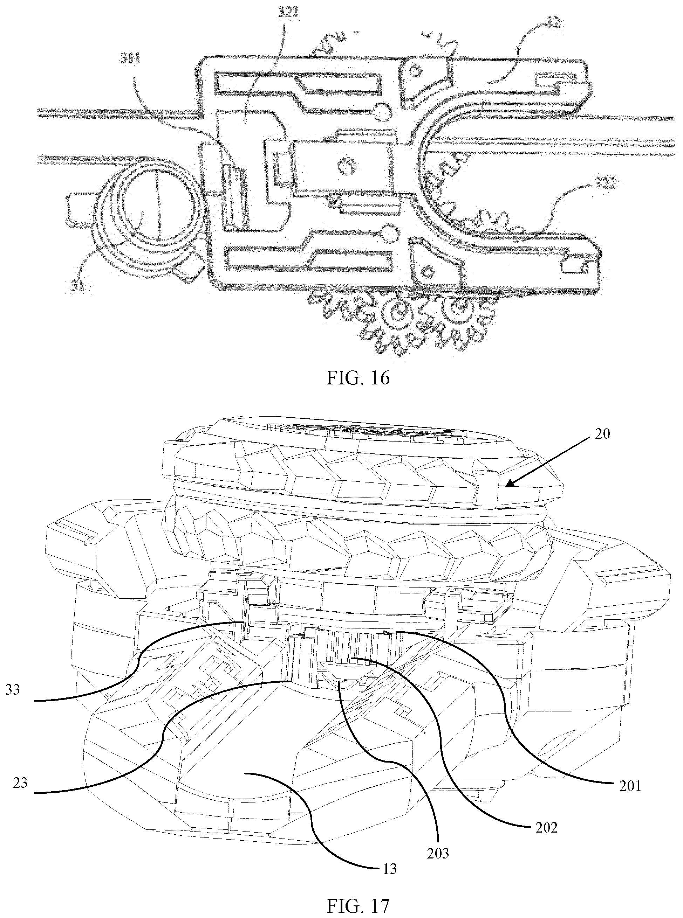

As illustrated in FIGS. 1 to 3 and 10 to 17, there is provided a launch toy. The launch toy includes a to-be-driven toy 20 and a launcher 10. The to-be-driven toy 20 is provided with a receiving unit. When the to-be-driven toy 20 is placed at the drive position portion to transmit power, the receiving unit is fitted with and connected to the output unit 25. When the to-be-driven toy 20 is driven, the to-be-driven toy 20 is separated from the drive position portion.

In this embodiment, the to-be-driven toy 20 is a spinning top toy, the launcher 10 is a spinning top launcher, and the receiving unit is a gear 202 surrounding a lower outer ring of the spinning top toy.

Specifically, as illustrated in FIGS. 1 and 2, there is provided a launch toy. The launch toy includes a launcher 10 and a to-be-driven toy 20. The launcher 10 includes a housing 1, a rotary drive assembly 2, and a launch unit 3. The rotary drive assembly 2 includes a driver 21. The driver 21 surrounds an outside the housing 1. The driver 21 is movable forward and backward in a length direction of the housing 1 and configured to accelerate the to-be-driven toy 20. The launch unit 3 is configured to launch the to-be-driven toy 20 in the length direction of the housing 1. The driver 21 includes at least an extended position and a retracted position. At the extended position, a front end of the driver 21 extends beyond a front end of the housing 1 and a rear end connected to the housing 1. At the retracted position, the front end of the driver 21 is flush with the front end of the housing 1.

Specifically, as illustrated in FIGS. 1, 12, and 13, the launcher 10 includes a housing 1, a rotary drive assembly 2, and a launch unit 3. The rotary drive assembly 2 and the launch unit 3 are disposed at the housing 1. The driver 21 of the rotary drive assembly 2 surrounds at the outside the housing 1 and is movable forward and backward in the length direction of the housing 1. In FIG. 1, the driver 21 is at the retracted position. In this case, the front end of the driver 21 is flush with the front end of the housing 1, and a length of the launcher 10 is the shortest.

As illustrated in FIG. 2, the driver 21 is at the extended position, the driver 21 extends forward in the length direction of the housing 1, the front end of the driver 21 extends beyond the front end of the housing 1, and the rear end of the driver 21 is connected to the housing 1. In this case, the length of the launcher 10 is the longest.

As illustrated in FIG. 1, the driver 21 is repeatedly pulled after the to-be-driven toy 20 is mounted at the launcher 10, and the driver 21 moves back and forth along the housing 1 to accelerate the to-be-driven toy 20. Then, the launch unit 3 launches the to-be-driven toy 20, and the to-be-driven toy 20 is launched along the length direction of the housing 1.

In the present disclosure, the driver 21 may be retracted in the length direction of the housing 1 in the process of accelerating the to-be-driven toy 20. When the driver 21 is extended, an overall length of the launcher 10 can be increased, thereby changing a shape of the launcher 10. As a result, the launcher 10 changes its shape during play and become more attractive to children.

Preferably, as illustrated in FIGS. 1 and 2, the housing 1 is in a shape of a sword. The housing 1 includes a sword body 11. The driver 21 is in a shape of a sword blade. The driver 21 surrounds an outside of the sword body 11 and is movable forward and backward relative to the sword body 11.

As illustrated in FIG. 1, the housing 1 is in a shape of an ancient sword, and the driver 21 is in a shape of a sword blade. The driver 21 surrounds the outside of the sword body 11 of the housing 1, and the driver 21 and the sword body 11 of the housing 1 together form a complete sword appearance. Since the driver 21 can be retracted forward and backward, as illustrated in FIG. 2, when the driver 21 is extended forward, it looks like the sword blade is lengthened.

As illustrated in FIG. 1, the to-be-driven toy 20 is mounted in a middle part of the housing 1, and the to-be-driven toy 20, after being mounted, simulates a decorative piece on a guard of the sword. As illustrated in FIG. 2, after the to-be-driven toy 20 is launched, the to-be-driven toy 20 is shot forward in a length direction of the sword body 11 such that the launching process is more cool and more interesting.

Further, as illustrated in FIGS. 1 and 2, the housing 1 includes a sword hilt 12. The sword hilt 12 has a length direction in straight line with a launch direction of the to-be-driven toy 20.

Since the length direction of the sword hilt 12 is in straight line with the launch direction of the to-be-driven toy 20, it is convenient for the player to hold the sword hiltl2 before launching and to aim at a destination of the to-be-driven toy 20 through a front end of the sword body 11. Thus, more accurate launching of the to-be-driven toy 20 to a corresponding destination is facilitated. The destination may be a game board of the to-be-driven toy 20, or a piece of ground, or a table board.

Preferably, the to-be-driven toy 20 is a spinning top toy. When the to-be-driven toy 20 is launched to the destination, the spinning top toy can continue to rotate and play.

Optionally, the to-be-driven toy 20 may also be a toy car, a toy ball, or a toy airplane, etc.

Further, as illustrated in FIG. 1, the sword body 11 has a launch groove 13 along the length direction of the sword body 11. The to-be-driven toy 20 is launched along the launch groove 13.

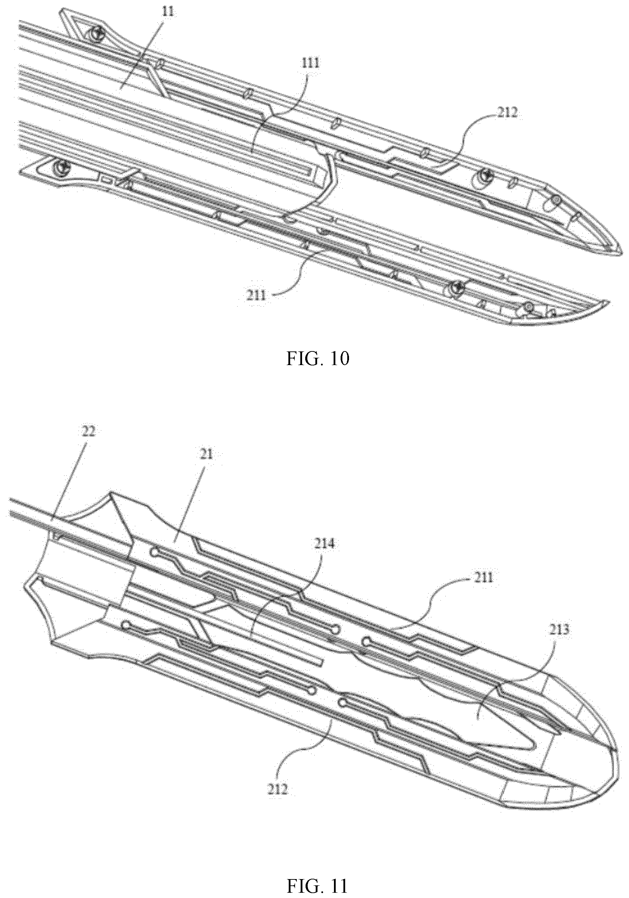

Specifically, the launch groove 13 is arranged in the length direction of the sword body 11, and the to-be-driven toy 20 is located at an inner side of the launch groove 13 before being launched. As illustrated in FIG. 11, a tip 203 of the to-be-driven toy 20 extends into the launch groove 13. When the to-be-driven toy 20 is launched, the tip 203 is launched forward along the launch groove 13. The launch groove 13 serves to guide the to-be-driven toy 20 to prevent the to-be-driven toy 20 from deviating from the launch direction.

In an embodiment of the present disclosure, as illustrated in FIGS. 10 and 11, the driver 21 includes a first upper cover 211, a second upper cover 212, and a lower cover 213. The first upper cover 211 and the second upper cover 212 are respectively connected above a left side and a right side of the lower cover 213. There is a gap between the first upper cover 211 and the second upper cover 212, and the gap corresponds to the launch groove 13.

Specifically, as illustrated in FIG. 10, the first upper cover 211 and the second upper cover 212 are located above the sword body 11 and partially blocked at an edge of the sword body 11. There is a gap between the first upper cover 211 and the second upper cover 212, and the gap corresponds to the launch groove 13. As a result, the first upper cover 211 and the second upper cover 212 do not block the launch groove 13 and cannot interfere with the to-be-driven toy 20. As illustrated in FIG. 2, when the driver 21 is at the extended position, the first upper cover 211 and the second upper cover 212 partially extend to the front end of the sword body 11. Since the gap is defined between the first upper cover 211 and the second upper cover 212, the to-be-driven toy 20, when sliding out of the launch groove 13, still moves forward in the length direction of the to-be-driven toy 20 and cannot interfere with the first upper cover 211 and the second upper cover 212 until the to-be-driven toy 20 moves out of the gap.

As illustrated in FIG. 11, the first upper cover 211 and the second upper cover 212 are respectively connected above a left side and a right side of the lower cover 213, and the lower cover 213 is located below the sword body 11.

The driver 21 is movable forward and backward relative to the sword body 11, but always remains connected to the sword body 11 and is not detached from the sword body 11.

In an embodiment of the present disclosure, as illustrated in FIGS. 10 and 11, the lower cover 213 is provided with a limit member 214 at an inner side surface of the lower cover 213, and the sword body 11 has a limit slide groove 111 on a bottom surface of the sword body 11. The limit member 214 is slidable in the limit slide groove 111. When the driver 21 is at the extended position, the limit member 214 has a front end abutting with a front end of the limit slide groove 111.

Specifically, as illustrated in FIG. 10, the sword body 11 has a limit slide groove 111 on a bottom surface of the sword body 11. The limit slide groove 111 extends in the length direction of the sword body 11. An end portion of the limit slide groove 111 is located at a front end of the sword body 11.

As illustrated in FIG. 11, the lower cover 213 is provided with a position limiter 214 at an inner side of the lower cover 213. The position limiter 214 is an elongated protruding rib extending in the length direction of the lower cover 213 and located on a rear half section of the lower cover 213.

When the driver 21 surrounds the sword body 11, the position limiter 214 is inserted into the limit slide groove 111. When the driver 21 moves forward and backward along the sword body 11, the position limiter 214 slides forward and backward in the limit slide groove 111. When the driver 21 is at the extended position, the front end of the position limiter 214 abuts with the front end of the limit slide groove 111. As a result, the driver 21 is not detached from the sword body 11 while a longest extended position of the driver 21 is limited.

Optionally, other structures may be used between the driver 21 and the sword body 11 to achieve position limiting at the extended position. For example, a protrusion and a baffle plate that cooperate with each other are provided. The protrusion may be disposed at an inner side of the lower cover 213, and the baffle plate may be disposed on a lower surface of the front end of the sword body 11.

In an embodiment of the present disclosure, as illustrated in FIG. 3, the rotary drive assembly 2 further includes a drive rack 22. The drive rack 22 has an end connected to the driver 21. When the driver 21 moves, the drive rack 22 is driven to move in the length direction of the housing 1. The drive rack 22 is configured to accelerate the to-be-driven toy 20.

Specifically, the drive rack 22 has an end fixedly connected to one of the upper covers of the driver 21 and is also in transmission with the gear transmission assembly 23. A gear in the gear transmission assembly 23 may be meshed with a spinning top gear 202 of the to-be-driven toy 20. The drive rack 22 extends in the length direction of the housing 1. When the driver 21 is pulled, the driver 21 drives the drive rack 22 to move in the length direction of the housing 1, the drive rack 22 in turns drives the gear transmission assembly 23 to transmit power, and the gear transmission assembly 23 in turn drives the to-be-driven toy 20 to accelerate.

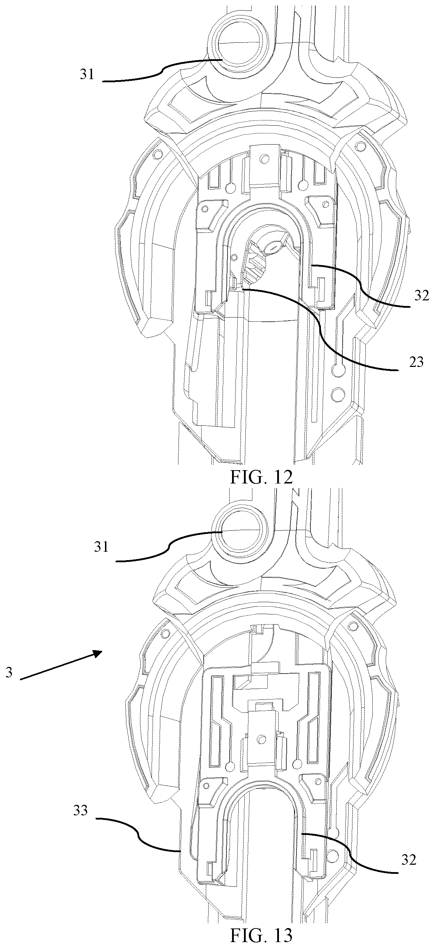

In an embodiment of the present disclosure, as illustrated in FIGS. 12 and 13, the launch unit 3 includes a launch button 31 and an ejection member 32, and the launch unit 3 includes a to-be-launched state and a launching state.

In the to-be-launched state, the to-be-driven toy 20 is mounted at the ejection member 32, the ejection member 32 moves to a to-be-launched position. The launch button 31 locks the ejection member 32, and the to-be-driven toy 20 is connected to the rotary drive assembly 2.

When the launch button 31 is pressed down, the launch button 31 unlocks the ejection member 32. The launch unit 3 is switched from the to-be-launched state to the launching state, and the ejection member 32 moves to the launching position to allow the to-be-driven toy 20 to be launched.

Specifically, as illustrated in FIG. 12, the launch unit 3 is in the to-be-launched state, the ejection member 32 moves backward to the to-be-launched position, and the ejection member 32 compresses an energy storage spring. As illustrated in FIG. 10, a lock hook 311 of the launch button 31 extends into a lock groove 321 at a rear side of the ejection member 32, and the launch button 31 locks the ejection member 32, to allow the ejection member 32 to remain in the to-be-launched position. The ejection member 32 is a plate structure. The ejection member 32 further includes a spinning top mounting groove 322. The to-be-driven toy 20 may be mounted in the spinning top mounting groove 322. As illustrated in FIG. 11, in the to-be-launched state, the spinning top gear 202 of the to-be-driven toy 20 is precisely meshed with the gear in the gear transmission assembly 23 of the rotary drive assembly 2, to allow the rotary drive assembly 2 to accelerate the to-be-driven toy 20.

As illustrated in FIG. 13, the launch unit 3 is in the launching state. As illustrated in FIG. 10, when the launch button 31 is pressed down, the lock hook 311 of the launch button 31 is detached from the lock groove 321. The ejection member 32 is ejected forward under an action of the energy storage spring. As such, the ejection member 32 is switched to the launching state of FIG. 7. The ejection member 32 is configured to push the to-be-driven toy 20 to separate from the rotary drive assembly 2 and apply a forward thrust to the to-be-driven toy 20. The ejection member 32 stops moving forward after it moves to the launching position, and the to-be-driven toy 20 continues to move forward under inertia until the to-be-driven toy 20 is completely detached from the launcher 10.

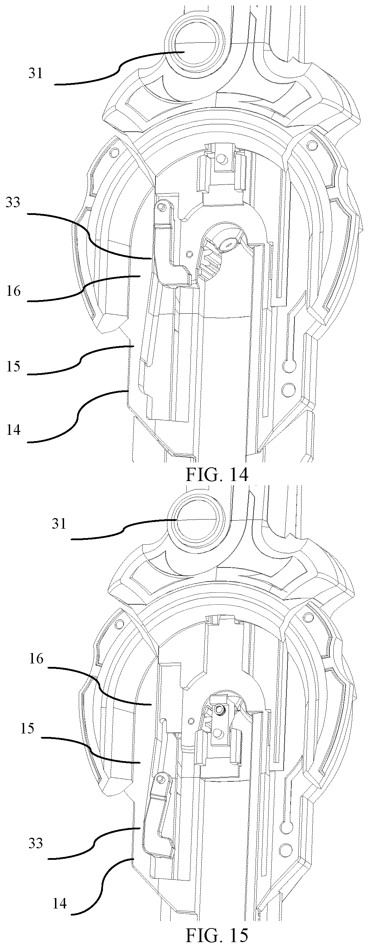

In an embodiment of the present disclosure, as illustrated in FIGS. 14 and 15, the launch unit 3 further includes a pressing member 33. The pressing member is rotatably connected to the ejection member 32.

In the to-be-launched state, the pressing member 33 rotates to a position where the pressing member 33 is in contact with the to-be-driven toy 20 to limit the separation of the to-be-driven toy 20 from the ejection member 32.

In the launching state, the pressing member 33 rotates to a position where the pressing member 33 is separated from the to-be-driven toy 20.

Specifically, as illustrated in FIG. 14, the ejection member 32 is omitted in FIG. 14, and the pressing member 33 is rotatably connected to the ejection member 32. When the ejection member 32 retracts back to the to-be-launched position, the pressing member 33 is restricted by the housing 1 and rotates toward the to-be-driven toy 20. As illustrated in FIG. 11, the pressing member 33 is pressed against a protruding ring 201 of the to-be-driven toy 20, and the protruding ring 201 protrudes radially. As a result, the to-be-driven toy 20 cannot be separated from the ejection member 21 during the acceleration process.

As illustrated in FIG. 15, when the ejection member 21 moves forward to the launching position, the housing 1 releases the restriction on the pressing member 33, and the pressing member 33 rotates away from the to-be-driven toy 20 under the action of the torsion spring. As a result, the pressing member 33 is separated from the protruding ring 201. In this way, when the ejection member 21 launches the to-be-driven toy 20, the to-be-driven toy 20 is no longer restricted by the pressing member 33 and may be launched.

Further, as illustrated in FIGS. 14 and 15, the pressing member 33 is connected to the ejection member 32 by a torsion spring. The torsion spring is configured to allow the pressing member 33 to have a tendency to rotate to a position where the pressing member 33 is separated from the to-be-driven toy 20.

The housing 1 is provided with a first position-limiting portion 14, a guide ramp 15, and a second position-limiting portion 16. The guide ramp 15 is disposed between the first position-limiting portion 14 and the second position-limiting portion 16.

In the launching state, the pressing member 33 is in contact with the first position-limiting portion 14.

When switching back to the to-be-launched state, the to-be-driven toy 20 is mounted on the ejection member 32 and pushes the ejection member 32 to move to the to-be-launched position. In this case, the ejection member 32 drives the pressing member 33 to move from the first position-limiting portion 14 to the second position-limiting portion 16, and the guide ramp 15 is in contact with the pressing member 33 and pushes the pressing member 33 to rotate towards the to-be-driven toy 20.

In the to-be-launched state, the pressing member 33 enters the second position-limiting portion 16, the second position-limiting portion 16 is in contact with the pressing member 33, and the pressing member 33 is pressed against the to-be-driven toy 20.

As illustrated in FIG. 14, the housing 1 is provided with a first position-limiting portion 14, a guide ramp 15, and a second position-limiting portion 16. The guide ramp 15 is disposed between the first position-limiting portion 14 and the second position-limiting portion 16. The second position-limiting portion 16 is disposed at a rearward position, and the second position-limiting portion 16 is configured to squeeze the pressing member 33 to rotate towards the to-be-driven toy 20. The first position-limiting portion 14 is disposed at a forward position, and the first position-limiting portion 14 is configured to partially release the pressing member 33, to allow the pressing member 33 to rotates outward to a position where the pressing member 33 is separated from the to-be-driven toy 20. The guide ramp 15 provide a guide function, and therefore the pressing member 33 can smoothly move to the first position-limiting portion 14 or the second position-limiting portion 16 during the movement of the pressing member 33 with the ejection member 21.

A play method of a preferred embodiment of the present disclosure is as follows.

As in FIG. 1, the to-be-driven toy 20 is mounted on the ejection member 31, and the to-be-driven toy 20 pushes the ejection member 31 to retract back to the to-be-launched position. In this case, the ejection member 31 is locked with the launch button 31 to remain in the to-be-launched state. In this way, the to-be-driven toy 20 is connected to the rotary drive assembly 2.

The player pulls the driver 21 back and forth, and the driver 21 drives the to-be-driven toy 20 to continuously accelerate. After the to-be-driven toy 20 is accelerated to a certain extent, the player presses down the launch button 31. In this case, the launch button 31 unlocks the ejection member 31, and the ejection member 31 moves forward quickly to allow the to-be-driven toy 20 to be launched. In an initial stage after the to-be-driven toy 20 is launched, the to-be-driven toy 20 moves along the launch groove 13. Subsequently, the to-be-driven toy 20 is completely detached from the launcher 10, is launched to a designated game surface, and continues to rotate to be played.

The launcher 10 in the present disclosure may change its own form during the acceleration process and may be retracted. In this way, the toy has an increased interest and appeals to children. In addition, the launcher 10 is in the shape of the sword, which is more awesome when playing, and the launcher 10 itself may be played alone. The sword hilt of the sword is in straight line with the launch direction of the to-be-driven toy 20, which facilitates more accurate aiming at the launch destination.

The above is only the principle and preferred embodiments of the present disclosure. It should be pointed out that for those skilled in the art, on the basis of the principle of the present disclosure, several other variations may be made, which should also be regarded as the protection scope of the present disclosure.

## Claims

1. A rotary drive assembly, comprising a drive rack, a switching unit, a first transmission unit, and an output unit, the output unit being fitted with and connected to a to-be-driven toy to output power, the first transmission unit having an end fitted with and connected to the output unit to transmit power, the drive rack being configured to drive the switching unit, the switching unit at least having a first position portion connected to the first transmission unit and a second position portion away from the first transmission unit and directly connected to the output unit, wherein:
in response to the drive rack moving in a first direction, the switching unit is switched to the first position portion, and the output unit is driven by the first transmission unit to rotate forward; and
in response to the drive rack moving in a second direction, the switching unit is switched to the second position portion, and the output unit is driven by the switching unit to rotate forward, the first direction being opposite to the second direction.

2. The rotary drive assembly according to claim 1, wherein the switching unit comprises an input gear in transmission connection with the drive rack, a swing lever, and a swing lever gear meshed with the swing lever gear, the swing lever having an end rotatably connected to a center of the input gear and the other end rotatably connected to a center of the swing lever gear, wherein:
in response to the drive rack moving in the first direction, the swing lever is driven by the drive rack to swing towards the first transmission unit, enabling the swing lever gear to be meshed with a transmission gear of the first transmission unit; and
in response to the drive rack moving in the second direction, the swing lever is driven by the drive rack to swing towards the output unit, enabling the swing lever gear to be in transmission with the output unit.

3. The rotary drive assembly according to claim 2, wherein the switching unit further comprises a synchronous gear being coaxially and fixedly connected to the input gear, the synchronous gear having a diameter smaller than a diameter of the input gear, and the synchronous gear being meshed with the drive rack.

4. The rotary drive assembly according to claim 1, wherein the switching unit comprises:
an input gear in transmission connection with the drive rack;
a swing frame having a first end portion and a second end portion away from the first end portion;
a first swing gear disposed at the first end portion of the swing frame;
a second swing gear disposed at the second end portion of the swing frame; and
an intermediate gear disposed in a middle part of the swing frame and meshed with the first swing gear and the second swing gear simultaneously, the swing frame swinging around an axis of the intermediate gear, and the input gear being in transmission connection with the intermediate gear, wherein:
in response to the drive rack moving in the first direction, the swing frame is driven by the intermediate gear to swing until the first swing gear is in transmission with the first transmission unit; and
in response to the drive rack moving in the second direction, the swing frame is driven by the intermediate gear to swing until the second swing gear is in transmission with the output unit.

5. The rotary drive assembly according to claim 4, wherein the switching unit further comprises:
a second transmission unit disposed between the input gear and the intermediate gear to transmit power; and
a synchronous gear coaxially and fixedly connected to the input gear, the synchronous gear having a diameter smaller than a diameter of the input gear, and the synchronous gear being meshed with the drive rack.

6. The rotary drive assembly according to claim 1, wherein:
the switching unit further has a third position portion, the switching unit being detached from each of the first transmission unit and the output unit at the third position portion; and
the rotary drive assembly further comprises a center-returning elastic member connected to the switching unit, the center-returning elastic member being configured to drive the switching unit when the drive rack is stationary to enable the switching unit to be maintained at the third position portion.

7. The rotary drive assembly according to claim 1, wherein:
the output unit is an output gear; and
the first transmission unit further comprises an odd number of transmission gears sequentially arranged and meshed with each other, a transmission gear of the odd number of transmission gears at an end of the first transmission unit being configured to be fitted with and connected to the switching unit, and a transmission gear of the odd number of transmission gears at the other end of the first transmission unit being configured to be meshed with the output gear.

8. A launcher, comprising:
a housing;
a drive position portion mounted in the housing; and
the rotary drive assembly according to any one of claims 1 to 7, the switching unit, the first transmission unit, and the output unit being mounted in the housing, the output unit at least partially extending to the drive position portion, and the drive rack being movably connected to the housing.

9. A launch toy, comprising:
a to-be-driven toy provided with a receiving unit; and
the launcher according to claim 8, wherein:
when the to-be-driven toy is placed at the drive position portion to transmit power, the receiving unit is fitted with and connected to the output unit; and
when the to-be-driven toy is driven, the to-be-driven toy is separated from the drive position portion.

10. The launch toy according to claim 9, wherein:
the to-be-driven toy is a spinning top toy;
the launcher is a spinning top launcher; and
the receiving unit is a gear surrounding a lower outer ring of the spinning top toy.
